# EUROPEAN PATENT APPLICATION

(11) **EP 2 957 887 A1**
(43) Date of publication of application: **23.12.2015**
(21) Application number: 14172589.5
(22) Date of filing: 16.06.2014
(51) Int. Cl.: G01N 3/56

(54) **Erosion control device**

(71) Applicant: Instytut Technologii Eksploatacji - Panstwowy Instytut Badawczy, 26-600 Radom (PL)
(72) Inventor: Zbrowski, Andrzej, 26-600 Radom (PL); Smolik, Jerzy, 26-600 Radom (PL); Mizak, Wojciech, 26-660 Wielogóra (PL); Mazurkiewicz, Adam, 26-600 Radom (PL)
(74) Representative: Rumpel, Alicja

(57) **Abstract**

An erosion control device comprising a load-bearing structure (1) founded on vibro-insulators (2), the loead-bearing structure (1) is enclosed with shields (3), the upper shield (4) and the lower shield (5), and at least one testing chamber is located inside, with a friction material feeder and a system for supplying air and friction material incorporated in the pneumatic installation mounted above, and with a control cabinet mounted underneath.

## Description

The subject of this invention is an erosion control device, particularly suitable for impact erosion.

The process of impact erosion takes place as a result of the impact of a friction material and air mixture stream on the object surface. An essential role in specifying resistance to erosion-specific wear of materials is performed by experimental tests, which allow for reproducing the actual wear process and which allow for setting the anticipated durability of a given structural element. Varying conditions in different machines and devices, for instance in flow machines, jet engines, ventilators or suspension furnaces determine the need to develop research and testing equipment and methods of simulation tests allowing for reproducing the process in conditions that are closest possible to actual usage. The available testing equipment offers only limited functionality in relation to the full scope of tests, which should be carried out in the context of erosion-specific wear.

Patent claim number PL 180097 comprises the method and device for testing resistance to erosion-specific wear of materials in load temperature conditions in controlled atmospheres. The device consists of a cylindrical chamber, in which a flat sample is placed in cooled handles. The testing chamber is permanently mounted to the columns of the durability machine, using a dedicated support with handles passing through the sleeve, welded to the side surface of the testing chamber, and the handle transfer spots are secured with dedicated material comprising ceramic fibers and flexible bellows. The dust used in the erosion test is fed from the container to the nozzle, to which compressed air is supplied, and then accelerated in the acceleration tube.

Patent claim number PL 210888 specifies a testing station for erosion treatment and erosion-friction testing specimen, comprising two base boards and two mobile boards, joined by four guide piles and elements facilitating perpendicular motion to the basic motion, and the mobile board is set on guide piles using antifriction sleeves and a nut with a leading screw serving as working support and performing traverse in-depth motion.

A method according to patent claim number DE102013004103 is characteristic in that the sample for observation is placed in the interior of the testing chamber on a round trajectory. The friction material is fed in a stream with air, moving towards the sample.

A phenomenon and method according to patent claim number CA2795584 is characteristic in that a sample, on which the friction material is blasted, is installed in a testing chamber equipped with a set of sensors. The sample is mounted in a way as to allow for its motion, and particularly for its rotation in the chamber interior or a change of the angle, under which the friction material blasts it. After falling to the bottom, the friction material, which is fed to the chamber, is removed through the filter to a container equipped with a set of heaters. A computer may operate both the air stream velocity and the motion of the sample.

In turn, publication number US20130243027 specifies an erosion tester structure comprising a rotating, heated element, which is adapted to streaming sand onto a sample placed in the erosion tester, a heating element for heating the rotating element and an engine for inducing the rotary motion of the heated element.

The sample is also set into rotary motion in a solution according to method number CN202548024, characteristic in that a rotating table with sample handles is placed inside the testing chamber. During the test, samples made of various materials are placed inside the handles, thanks to which it is possible to test and compare resistance to erosion of various materials operating in identical conditions, all at the same time.

All familiar solutions allow for examining the process of erosion taking place only in conditions similar to real-life ones, without the possibility of controlling all essential parameters, such as simultaneous control of the temperature of the sample, of the air and of the friction material. Therefore, it was essential to develop a device for testing erosion-specific wear, which would enable not only a change of the angle, under which erosion phenomena take place, but also the properties of the sample tested in terms of the properties of the stream with the friction material, in particular the temperature, particularly in the case of erosion control in high-temperature conditions.

The erosion control device according to the invention comprises a load-bearing structure founded on vibro-insulators. The load-bearing structure is enclosed with shields: the upper shield and the lower shield, and at least one testing chamber is located inside, with a friction material feeder and an air and friction material supply system incorporated in the pneumatic installation, and a control cabinet located under the measurement chamber. In a beneficial embodiment of the invention, the shields are made of perforated sheet metal. The right side of the frame is equipped with inspection door, behind which a labyrinth filter is placed which must be cleaned of the used friction material after executing a series of tests. The rear part of the frame is equipped with service door, behind which a pneumatic system is installed, comprising a set of proportional valves and an air dryer. Below the door installed are: a power supply connection, main compressed air valve, water supply and drainage connections for cooling the rotating positioner module.

A control panel is mounted to the load-bearing structure on an articulated arm. The control panel is equipped with a touch panel, a safety switch and a set of controls, and is connected with an electrical beam to the control system elements located in the cabinet mounted to the load-bearing structure. A friction material dispensing module is located in the upper part of the device, under which the testing chamber is installed.

The dispensing module is connected to the mixing chamber, located underneath it and equipped with a nozzle located in the measurement chamber wall, opposite the sample mounted in the positioner. A chute is located in the lower part of the measurement chamber, with a line transferring the friction material to the filtration module. The filtration module comprises at least one labyrinth filter and/or cylindrical filter. The labyrinth filter is equipped with partitions. Peripheral partitions are mounted to the base, whereas the central partition is mounted to the upper part of the labyrinth filter body. A hole is performed in the upper part of the labyrinth filter body, which is used to pass air to the cylindrical filter. The cylindrical filter is connected to the labyrinth filter housing via a flange connection. The cylindrical filter comprises a set of high-temperature high-permeable ceramic filters.

The nozzle is an exchangeable element. A type-series of nozzles with variable internal diameter and length may be applied in non-standard tests. Applying nozzles with varying diameters determines the velocity of the air and friction material stream velocity.

The measurement chamber is equipped with a set of controlled heaters for heating the sample.

Outside the measurement chamber, the pneumatic installation comprises a set of heat exchangers for heating the air to temperature at least 600°C. This set comprises exchangers for low and high air stream flow intensity values, whereas, in a beneficial embodiment of the invention, the maximal velocity of the air and friction material stream flow does not exceed 180m/s. In a standard test cycle, only one of the exchangers is used to heat then air stream, depending on the input parameters of the test performed.

A rotating positioner module is installed centrally in the measurement chamber. The velocity of positioner rotation is regulated by the control system.

In the heating process, the positioner rotates at low speed, causing the air mass to move inside the chamber 23 and cold air layers to mix, as a result of which the entire air mass included in the chamber heats up evenly.

In the test, the friction material blasts the tested sample, and then the mixture pours through the chute and the filtration module comprising a labyrinth and cylindrical filter. Inside the labyrinth filer, the mixture in motion loses kinetic energy as a result of hitting the partitions, and then the friction material falls to the bottom. Peripheral partitions are mounted to the base, whereas the central partition is mounted to the upper part of the labyrinth filter body. This method of mounting partitions aims at lengthening the road of the passing mixture in order to ensure that the maximum possible amounts of friction material particles are precipitated. In the end phase of the filtration process, the air passes through a cylindrical filter, which comprises a set of high-temperature high-permeability ceramic filters. After that, the air cleared of the solid friction material particles flows out of the pneumatic installation.

The device developed combines the features of testing stations applied in erosion control, it is an open-structure and flexible system, wherein each of the modules may be modified independently. It is particularly important in the case of adapting the possibilities of the testing system to individual needs resulting e.g. from the test conditions.

The modular structure and the functionality of the developed device ensures flexible control of the erosion process parameters in a wide-scope approach, in order to reflect the actual process of material wear. The scopes of device parameters allows for full realization of tests according to standard ASTM G 76 as well as non-standardized tests according to own experiments. The available testing tools dedicated to erosion control allow for the realization of tests in high-temperature conditions in a limited scope. Two independent heating modules enable independent control of the temperature of the air fed to the measurement chamber and the temperature of the tested sample. The solutions proposed constitute a considerable advantage of the device in the process of controlling erosion-specific wear. Due to the possibility of maintaining precise control of the erosion process parameters, such as: velocity of the air and friction material stream, the amount of friction material dispensed, the angle of the sample, the temperature of the sample and the air temperature, the developed equipment may serve as a tool for researchers and constructors, aiding in explaining the physical aspects of the erosion process.

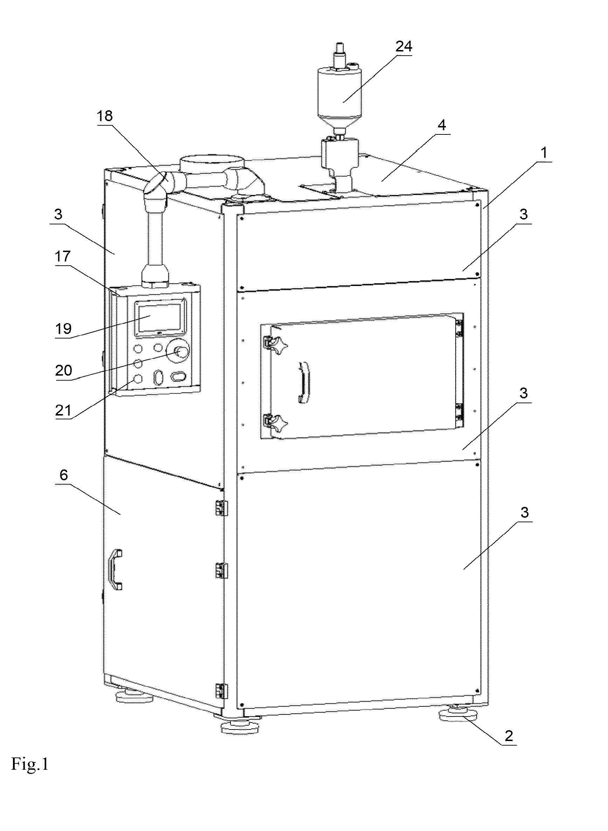

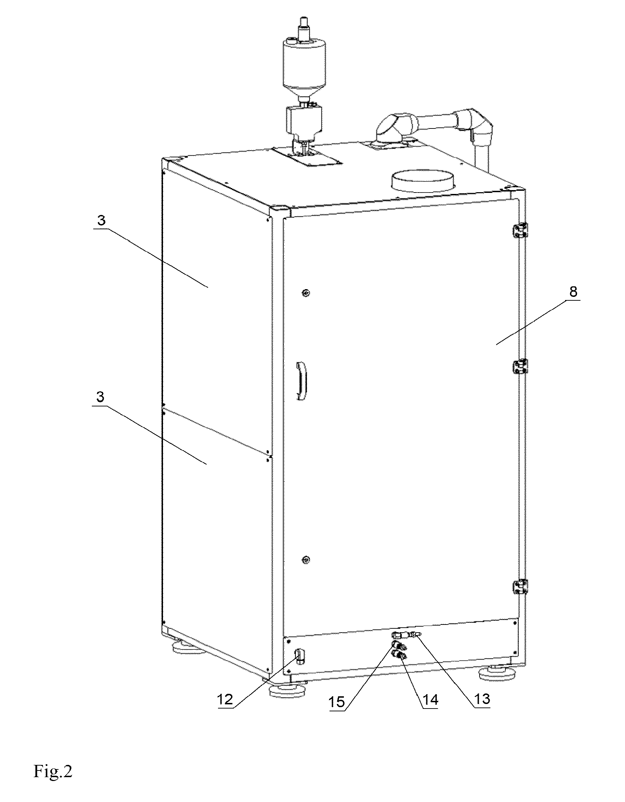

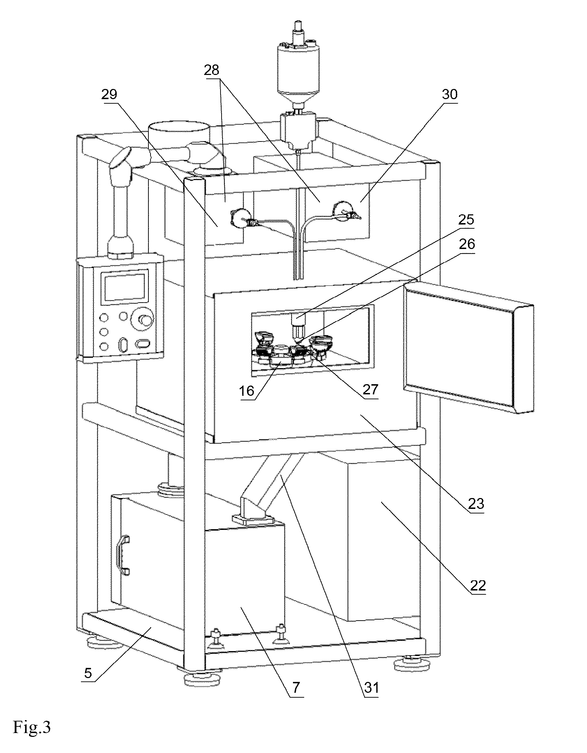

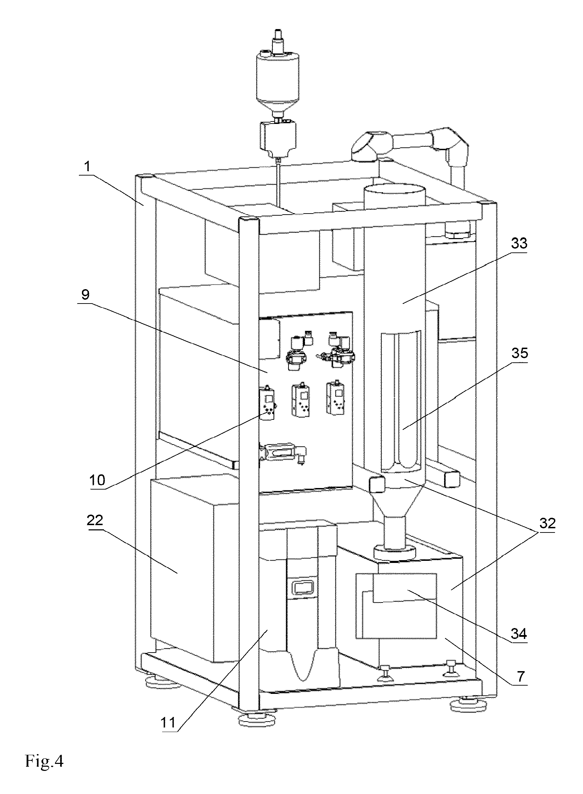

The erosion control device was presented in the figure, in which fig. 1 includes a view on the device according to the invention, with the shields mounted in the front, that is from the access side to the measurement chamber, fig. 2 presents the back of the device according to the invention, with a view of the service door, fig. 3 presents a view on the device according to the invention, without shields in the front view, fig. 4 presents a view of the device according to the invention, without shields, in a rear view.

### Example

The erosion control device according to the invention comprises a load-bearing structure 1 founded on vibro-insulators 2. The load-bearing structure 1 is enclosed with shields 3: the upper shield 4 and the lower shield 5, and at least one testing chamber is located inside, with a friction material feeder and an air and friction material supply system incorporated in the pneumatic installation, and a control cabinet located under the measurement chamber. In a beneficial embodiment of the invention, the shields are made of perforated sheet metal. The right side of the frame 1 is equipped with inspection door 6, behind which a labyrinth filter 7 is placed which must be cleaned of the used friction material after executing a series of tests. The rear part of the frame 1 is equipped with service door 8, behind which a pneumatic system 9 is installed, comprising a set of proportional valves 10 and an air dryer 11. Below the door 8 installed are: a power supply connection 12, main compressed air valve 13, water supply 14 and drainage 15 connections for cooling the rotating positioner module 16.

A control panel 17 is mounted to the load-bearing structure 1 on an articulated arm 18. The control panel 17 is equipped with a touch panel 19, a safety switch 20 and a set of controls 21, and is connected with an electrical beam to the control system elements located in the cabinet 22 mounted to the load-bearing structure 1. A friction material dispensing module 24 is located in the upper part of the device, under which the testing chamber is installed.

The dispensing module 24 is connected to the mixing chamber 25, located underneath it and equipped with a nozzle 26 located in the measurement chamber 23 wall, opposite the sample 27 mounted in the positioner 16. A chute 31 is located in the lower part of the measurement chamber, with a line transferring the friction material to the filtration module 32. The filtration module 32 comprises at least one labyrinth filter 7 and/or cylindrical filter 33. The labyrinth filter 7 is equipped with partitions 34. Peripheral partitions 34 are mounted to the base, whereas the central partition 34 is mounted to the upper part of the labyrinth filter body 7. A hole is performed in the upper part of the labyrinth filter body 7, which is used to pass air to the cylindrical filter 33. The cylindrical filter is connected to the labyrinth filter housing via a flange connection. The cylindrical filter 33 comprises a set of high-temperature high-permeable ceramic filters 35.

The nozzle 26 is an exchangeable element. A type-series of nozzles with variable internal diameter and length may be applied in non-standard tests. Applying nozzles 26 with varying diameters determines the velocity of the air and friction material stream velocity.

The measurement chamber 23 is equipped with a set of controlled heaters for heating the sample 27.

Outside the measurement chamber 23, the pneumatic installation comprises a set of heat exchangers 28 for heating the air to temperature at least 600°C. This set comprises exchangers for low 29 and high 30 air stream flow intensity values, whereas, in a beneficial embodiment of the invention, the maximal velocity of the air and friction material stream flow does not exceed 180m/s. In a standard test cycle, only one of the exchangers is used to heat then air stream, depending on the input parameters of the test performed.

A rotating positioner module 16 is installed centrally in the measurement chamber 23. The velocity of positioner rotation is regulated by the control system.

In the heating process, the positioner 16 rotates at low speed, causing the air mass to move inside the chamber 23 and cold air layers to mix, as a result of which the entire air mass included in the chamber 23 heats up evenly.

In the test, the friction material blasts the tested sample 27, and then the mixture pours through the chute 31 and the filtration module 32 comprising a labyrinth 7 and cylindrical 33 filter. Inside the labyrinth filer 7, the mixture in motion loses kinetic energy as a result of hitting the partitions 34, and then the friction material falls to the bottom. Peripheral partitions 34 are mounted to the base, whereas the central partition 34 is mounted to the upper part of the labyrinth filter body. This method of mounting partitions aims at lengthening the road of the passing mixture in order to ensure that the maximum possible amounts of friction material particles are precipitated. In the end phase of the filtration process, the air passes through a cylindrical filter 33, which comprises a set of high-temperature high-permeability ceramic filters 35. After that, the air cleared of the solid friction material particles flows out of the pneumatic installation.

The device developed combines the features of testing stations applied in erosion control, it is an open-structure and flexible system, wherein each of the modules may be modified independently. It is particularly important in the case of adapting the possibilities of the testing system to individual needs resulting e.g. from the test conditions.

The modular structure and the functionality of the developed device ensures flexible control of the erosion process parameters in a wide-scope approach, in order to reflect the actual process of material wear. The scopes of device parameters allows for full realization of tests according to standard ASTM G 76 as well as non-standardized tests according to own experiments. The available testing tools dedicated to erosion control allow for the realization of tests in high-temperature conditions in a limited scope. Two independent heating modules enable independent control of the temperature of the air fed to the measurement chamber and the temperature of the tested sample. The solutions proposed constitute a considerable advantage of the device in the process of controlling erosion-specific wear. Due to the possibility of maintaining precise control of the erosion process parameters, such as: velocity of the air and friction material stream, the amount of friction material dispensed, the angle of the sample, the temperature of the sample and the air temperature, the developed equipment may serve as a tool for researchers and constructors, aiding in explaining the physical aspects of the erosion process.

## Claims

1. The erosion control device **characterized in that** it comprises a load-bearing structure (1) founded on vibro-insulators (2), the load-bearing structure (1) is enclosed with shields (3): the upper shield (4) and the lower shield (5), and at least one testing chamber is located inside, with a friction material feeder and an air and friction material supply system incorporated in the pneumatic installation, and a control cabinet located under the measurement chamber.

2. The device according to claim 1 **characterized in that** the shields are made of perforated sheet metal.

3. The device according to claim 1 or 2 **characterized in that** the right side of the frame (1) is equipped with inspection door (6), behind which a labyrinth filter (7) is placed which must be cleaned of the used friction material after executing a series of tests, and the rear part of the frame (1) is equipped with service door (8), behind which a pneumatic system (9) is installed, comprising a set of proportional valves (10) and an air dryer (11), and below the door (8) installed are: a power supply connection (12), main compressed air valve (13), water supply (14) and drainage (15) connections for cooling the rotating positioner module (16).

4. The device according to claim 1, 2 or 3 **characterized in that** a control panel (17) is mounted to the load-bearing structure (1) on an articulated arm (18), whereas the control panel is equipped with a touch panel (19), a safety switch (20) and a set of controls (21), and is connected with an electrical beam to the control system elements located in the cabinet (22) mounted to the load-bearing structure (1), and a friction material dispensing module (24) is located in the upper part of the device, under which the testing chamber is installed.

5. The device according to claim 1, 2, 3 or 4 **characterized in that** the dispensing module (24) is connected to the mixing chamber (25), located underneath it and equipped with a nozzle (26) located in the measurement chamber (23) wall, opposite the sample (27) mounted in the positioner (16), and a chute (31) is located in the lower part of the measurement chamber, with a line transferring the friction material to the filtration module (32).

6. The device according to claim 5 **characterized in that** the filtration module (32) comprises at least one labyrinth filter (7) and/or cylindrical filter (33).

7. The device according to claim 5 or 6 **characterized in that** the labyrinth filter (7) is equipped with partitions (34), and the peripheral partitions (34) are mounted to the base, whereas the central partition (34) is mounted to the upper part of the labyrinth filter body (7), and a hole is performed in the upper part of the labyrinth filter body (7), which is used to pass air to the cylindrical filter.

8. The device according to claim 5, 6 or 7 **characterized in that** the cylindrical filter is connected to the labyrinth filter housing via a flange connection, and the cylindrical filter (33) comprises a set of high-temperature high-permeable ceramic filters (35).

9. The device according to claim 1, 2, 3, 4, 5, 6, 7 or 8 **characterized in that** outside the measurement chamber (23), the pneumatic installation comprises a set of heat exchangers (28) for heating the air to temperature at least 600°C, and this set comprises exchangers for low (29) and high (30) air stream flow intensity values, whereas, in a beneficial embodiment of the invention, the maximal velocity of the air and friction material stream flow does not exceed 180m/s.

10. The device according to claim 1, 2, 3, 4, 5, 6, 7, 8 or 9 **characterized in that** a rotating positioner module (16) is installed centrally in the measurement chamber (23).
